(19) Europäisches Patentamt
European Patent Office
Office européen des brevets

(11) **EP 3 535 796 B1**

(12) **EUROPEAN PATENT SPECIFICATION**

(45) Date of publication and mention
of the grant of the patent:
**15.06.2022 Bulletin 2022/24**

(21) Application number: **17867142.6**

(22) Date of filing: **07.11.2017**

(51) International Patent Classification (IPC):
*H01M 10/056* (2010.01)  *H01M 10/0525* (2010.01)
*H01M 10/0562* (2010.01)

(52) Cooperative Patent Classification (CPC):
**H01M 10/0562; H01M 10/0525;** Y02E 60/10

(86) International application number:
**PCT/US2017/060421**

(87) International publication number:
**WO 2018/085847 (11.05.2018 Gazette 2018/19)**

(54) **LITHIUM SOLID STATE ELECTROLYTE INTERFACE TREATMENT**

BEHANDLUNG DER GRENZFLÄCHE EINES LITHIUM-FESTSTOFFELEKTROLYTEN

TRAITEMENT D'INTERFACE D'ÉLECTROLYTE SOLIDE AU LITHIUM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.11.2016 US 201662418506 P**

(43) Date of publication of application:
**11.09.2019 Bulletin 2019/37**

(73) Proprietor: **University of Maryland, College Park
College Park, MD 20742 (US)**

(72) Inventors:
• **HU, Liangbing**
**Hyattsville, Maryland 20782 (US)**
• **WACHSMAN, Eric**
**Fulton, Maryland 20759 (US)**
• **WANG, Chengwei**
**College Park,**
**Maryland 20740-1301 (US)**
• **GONG, Yunhui**
**Clarksville, Maryland 21029 (US)**

(74) Representative: **Clements, Andrew Russell Niel et al**
**Schlich**
**9 St Catherine's Road**
**Littlehampton, West Sussex BN17 5HS (GB)**

(56) References cited:
WO-A1-2016/069749        WO-A1-2017/190135
WO-A1-2018/068034        WO-A1-2018/184007
WO-A1-2018/184010        US-A1- 2002 182 508
US-A1- 2004 096 737      US-A1- 2005 175 900
US-A1- 2013 216 910      US-A1- 2013 323 603
US-A1- 2014 287 305      US-A1- 2015 044 575
US-B1- 8 940 446

EP 3 535 796 B1

## Description

This invention was made with government support under NNC16CA03C awarded by the National Aeronatuics and Space Administration. The government has certain rights to this invention.

BACKGROUND OF THE INVENTION

### Field of the Invention

The present invention is directed to solid state electrolytes that comprise a coating layer. The present invention is also directed to methods of making the solid state electrolyte materials and methods of using the solid state electrolyte materials in batteries and other electrochemical technologies.

### Background of the Invention

Developing safe batteries with high energy density is one of the most attractive goals for energy storage researchers. The high theoretical specific capacity of lithium (Li) metal and the non-flammability of solid state electrolytes (SSEs) make the solid state Li metal battery a promising option to achieve this goal. To make the switch from liquid to solid state electrolyte, the high interfacial resistance resulting from the poor solid-solid contacts between Li metal and SSEs needs to be addressed.

Lithium-ion batteries have been widely used in various applications for the last two decades. With the rapid development of portable electronic devices and electric vehicles, the demand for safe, high energy density batteries has grown. Using lithium metal as the anode is an attractive way to increase the energy density of batteries due to the high theoretical specific capacity (3.86 Ah/g) and low reduction potential (-3.05 V) of lithium metal. However, the growth of lithium dendrites can lead to battery performance decay and cause safety concerns, especially when flammable organic liquid electrolytes are used. Recently, many strategies have been developed to address the dendrite challenge of lithium metal batteries, such as using 3D structured current collectors to lower the current density (Zheng, G., et al., Nat. Nanotechnol. 8:618-623 (2014)), mixing the electrolyte with additives to form a protective layer (S.S. Zhang, J. Power Sources 162:1379-1394 (2006), and engineering modified separators to block dendrites (Luo, W., et al., Nano Lett. 15:6149-6154 (2015). Although these strategies have addressed some of the challenges associated with lithium dendrite, dendritic lithium growth remains an inevitable issue, and flammable liquid electrolytes still present a safety concern.

Solid state electrolytes are a fundamental strategy to achieve practical Li metal batteries free of the safety and performance issues resulting from other electrolytes. They are of interest due to their ability to mechanically block lithium dendrite growth and their non-flammability compared to organic liquid counterparts. Many SSEs have been studied including $Li_{2.88}PO_{3.73}N_{0.14}$ (LIPON), $Li_{10}GeP_2S_{12}$, $Li_{9.54}Si_{1.74}P_{1.44}S_{11.7}Cl_{0.3}$, $Li_{9.6}P_3S_{12}$ (LGPS), $Li_{1.3}Al_{0.3}Ti_{1.7}$ (LATP), perovskite lithium lanthanum titanates (LLTO), and the garnet-type Li-ion conductor LLMO (M = Zr, Nb, Ta). Amongst these SSEs, the cubic garnet phase solid state electrolytes have generated much interest due to their high ionic conductivities ($10^{-4}$ - $10^{-3}$ S/cm), their stability to lithium metal, and their wide electrochemical potential ranges. A challenge for garnet solid state batteries is their high interfacial impedance due to the poor wettability of the garnet SSEs against molten lithium, which causes a poor contact between garnet SSEs and lithium and leads to a large polarization and an uneven ion flow throught the interface. Several methods have been used to modify the interface, such as by applying mechanical pressure (Cheng, L., et al., ACS Appl. Mater. Interfaces 7:2073-2081 (2015)), using polymer electrolytes as a buffer layer (Zhou, W., et al., J. Am. Chem. Soc. 138:9385-9388 (2016)), and performing pre-active cycling at low current density (Sharafi, A., et al., J. Power Sources 302:135-139 (2016)). Although these methods have decreased interfacial resistance to some extent, further work is needed to address the fundamental issue of wettability between garnet SSEs and lithium metal.

Fundamentally, the poor wetting between molten Li metal and garnet pellets is due to the large difference in surface energy. This wetting issue between liquid metals and ceramic substrates has been extensively studied for multiple applications, such as metal-ceramic joining by brazing and fabricating metal matrix composites. See Xiao, P., et al., Acta Mater. 44:307 (1996); Drevet, B., et al., J. Mater. Sci. 47:8247 (2012); and Klein, R., et al., J. Eur. Ceram. Soc. 25:1757 (2005). Recently, with the rise in solid state Li metal batteries, the metal-ceramic contact has become a critical challenge towards the development of high energy density and safe energy storage devices.

Another challenge the lithium metal anode faces is the volume change during the cycling. One potentially effective strategy to combat this effect is the application of a 3D porous structure to serve as a host for the lithium metal anode. For this purpose, if garnet garnet SSEs were engineered to form a porous/dense bilayer structure, the porous layer could serve as the electrolyte and the separator. Moreover, the 3D porous structures of the SSEs can also increase the contact area with the electrode materials, further lowering the interface resistance and the specific current density. However, due to the high tortuosity of the porous structure, molten lithium metal needs to overcome more surface tension to infiltrate into the pores. Therefore, it is strongly desired to develop a method to improve the surface wettability of garnet SSEs with lithium metal.

A further challenge for the application of the garnet based solid state Li metal batteries is the poor interfacial contact between garnet SSEs and electrode materials. Direct contact between Li metal foil and garnet pellets normally results in poor contact and large interfacial resistance. By adding a polymer interface or applying pressure, the Li and garnet interface can be improved marginally, but still has shown high resistance. *See* Tao, X., et al., Nano. Lett. 17:2967 (2017). The poor wettability of molten Li against garnet substrates also makes it unfeasible to directly coat Li metal on garnet SSEs.

There is a need to increase the interfacial contact between the solid state electrolyte and electrode materials. Thus, there is a need for improved solid state electrolytes for use with Li metal batteries.

BRIEF SUMMARY OF THE INVENTION

The present invention provides a solid state electrolyte material comprising:

(a) a solid state electrolyte (SSE); and
(b) a coating layer of ZnO,

wherein the SSE comprises a plurality of pores in a 3D porous structure configured to contain an anode active material, the coating layer coats a surface of the pores , wherein the SSE is lithium-containing SSE with a garnet structure and the anode active material is lithium metal and the coating layer increases contact between the SSE material and the anode material.

In some embodiments, the surface coverage of the solid state electrolyte by the coating layer is between about 40% and about 100%.

In some embodiments, the solid state electrolye has the formula I:

$$Li_A L_B G_C J_D Zr_E O_F \qquad (I)$$

wherein:

A is 4 to 8;
B is 1.5 to 4;
C is 0 to 2;
D is 0 to 2;
E is 0 to 2;
F is 10 to 13;
L is Y or La;
G is Al, Mo, W, Nb, Sb, Ca, Ba, Sr, Ce, Hf, Rb, or Ta; and
J is Al, Mo, W, Nb, Sb, Ca, Ba, Sr, Ce, Hf, Rb, or Ta;
wherein G and J are different.

In some embodiments, the solid state electrolyte is selected from the group consisting of $Li_5La_3Nb_2O_{12}$, $Li_5La_3Ta_2O_{12}$, $Li_7La_3Zr_2O_{12}$, $Li_6La_2SrNb_2O_{12}$, $Li_6La_2BaNb_2O_{12}$, $Li_6La_2SrTa_2O_{12}$, $Li_6La_2BaTa_2O_{12}$, $Li_7Y_3Zr_2O_{12}$, $Li_{6.4}Y_3Zr_{1.4}Ta_{0.6}O_{12}$, $Li_{6.5}La_{2.5}Ba_{0.5}TaZrOi2$, $Li_{6.7}BaLa_2Nb_{1.75}Zn_{0.25}O_{12}$, $Li_{6.75}BaLa_2Ta_{1.75}Zn_{0.25}O_{12}$, and $Li_{6.75}La_{2.75}Ca_{0.25}Zr_{1.75}Nb_{0.25}O_{12}$.

In some embodiments, the solid state electrolyte is

$$Li_{6.75}La_{2.75}Ca_{0.25}Zr_{1.75}Nb_{0.25}O_{12}.$$

In some embodiments, the thickness of the solid state electrolyte is between about 1 $\mu$m and about 100 $\mu$m.

In some embodiments, the thickness of the coating layer is between about 1 nm and about 100 nm.

In some embodiments, the surface coverage of the solid electrolyte by the coating layer is between about 60% and about 100%.

In some embodiments, the surface coverage of the solid electrolyte by the coating layer is between about 80% and about 100%.

In some embodiments, the solid state electrolyte material has a surface interface resistance of between about 10 $\Omega \cdot cm^2$ and about 1200 $\Omega \cdot cm^2$.

In some embodiments, the solid state electrolyte material has a surface interface resistance of between about

$10 \ \Omega \cdot cm^2$ and about $800 \ \Omega \cdot cm^2$.

In some embodiments, the solid state electrolyte material has a surface interface resistance of between about $10 \ \Omega \cdot cm^2$ and about $400 \ \Omega \cdot cm^2$.

The present invention provides a solid state battery comprising:

(a) a cathode active material layer;
(b) an anode active material layer; and
(c) a solid state electrolyte material according to the claimed invention.

The present invention provides a method of producing a solid state electrolyte material according to the claimed invention comprising:

(a) applying the coating layer onto the solid state electrolyte; and
(b) heating the compound of (a) to prepare a solid state electrolyte material.

In some embodiments, the applying in (a) is using atomic layer deposition (ALD), plasma-enhanced ALD, chemical vapor deposition (CVD), low pressure CVD, plasma-enhanced CVD, physical vapor deposition (PVD), an epitaxy process, an electrochemical plating process, electroless deposition, a solution process, or combinations thereof.

In some embodiments, the applying in (a) is using atomic layer deposition or a solution process.

In some embodiments, the heating in (b) is conducted at a temperature between about 50 °C and about 300 °C.

In some embodiments, the heating in (b) is conducted at a temperature between about 75 °C and about 125 °C.

In some embodiments, the method of producing a solid state electrolye material further comprises:
(c) annealing the compound of (b).

In some embodiments, the annealing in (c) is conducted at a temperature between about 100 °C and about 1000 °C.

In some embodiments, the annealing in (c) is conducted at a temperature between about 400 °C and about 600 °C.

BRIEF DESCRIPTION OF THE DRAWINGS

The accompanying drawings, which are incorporated herein and form a part of the specification, illustrate one or more embodiments of the present invention and, together with the description, further serve to explain the principles of the invention and to enable a person skilled in the pertinent art to make and use the invention. The following drawings are given by way of illustration only, and thus are not intended to limit the scope of the present invention.

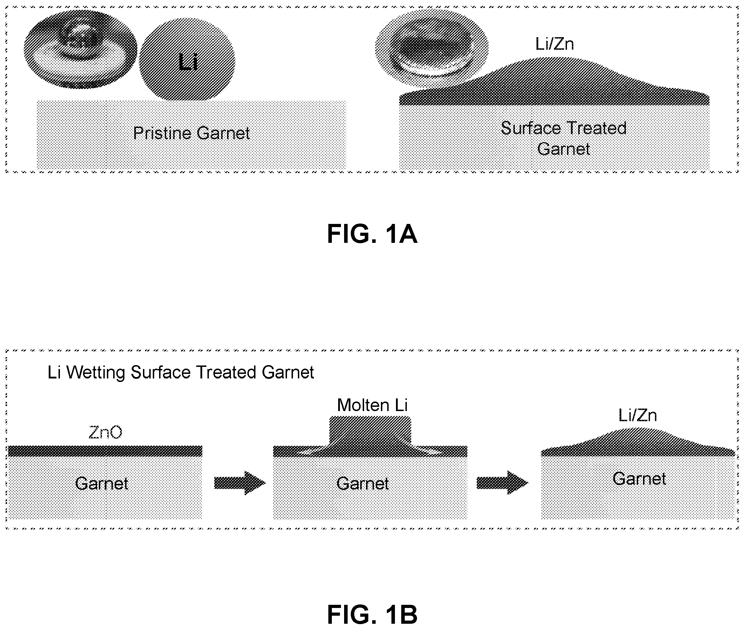

**Fig. 1A** are schematics of (left) a pristine garnet wetted with molten lithium and (right) a surface coated garnet wetted with molten lithium. The schematic of the pristine garnet shows a large contact angle and the schematic of the surface coated garnet shows improved wettability on the surface treated garnet.

**Fig. 1B** shows a schematic of the wetting process of the molten lithium on the ZnO coated surface of a garnet solid state electrolyte. In the schematic, the molten lithium diffuses into the ZnO layer to form a Li-Zn alloy and wets the surface of the garnet.

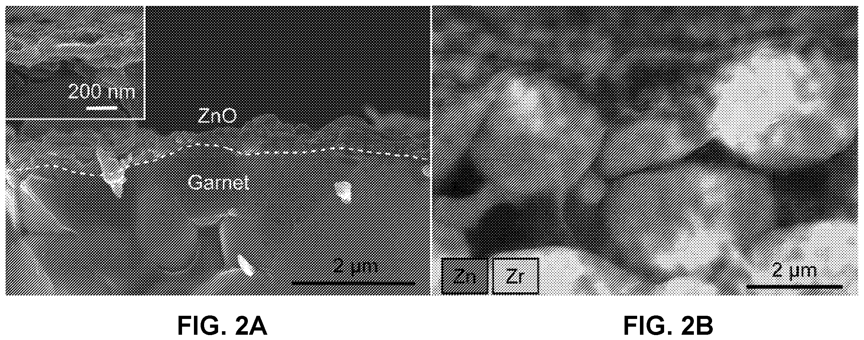

**Fig. 2A** is a scanning electron microscope (SEM) cross-section image of a ZnO coating on a $Li_{6.75}La_{2.75}Ca_{0.25}Zr_{1.75}Nb_{0.25}O_{12}$ solid state electrolyte. The inset is a cross-section SEM image of the solid state electron at higher magnification.

**Fig. 2B** shows an elemental mapping of a $Li_{6.75}La_{2.75}Ca_{0.25}Zr_{1.75}Nb_{0.25}O_{12}$ solid state electrolyte coated with a 50 nm ZnO layer using atomic layer deposition (ALD).

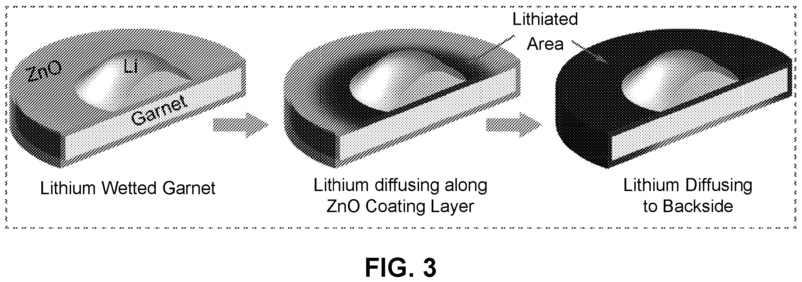

**Fig. 3** is a schematic of the lithium diffusion process along the ZnO coating layer on a garnet surface.

**Fig. 4A** is a digital image of the top side of the lithium-wetted ZnO coated $Li_{6.75}La_{2.75}Ca_{0.25}Zr_{1.75}Nb_{0.25}O_{12}$ solid state electrolyte after the lithium diffusion process. The middle section of the electrolyte appears lighter and was polished afterwards exposing the white garnet color underneath. The dark area was not polished and indicates that the lithium diffused to the backside along the edge instead of through the volume of the electrolyte pellet.

**Fig. 4B** is a digital image of the back side of the lithium-wetted ZnO coated $Li_{6.75}La_{2.75}Ca_{0.25}Zr_{1.75}Nb_{0.25}O_{12}$ solid state electrolyte after the lithium diffusion process.

**Fig. 4C** is a SEM cross-section image of the the lithium-wetted ZnO coated $Li_{6.75}La_{2.75}Ca_{0.25}Zr_{1.75}Nb_{0.25}O_{12}$ solid state electrolyte after the lithium diffusion process.

**Fig. 5A** is a photograph of the reaction between ZnO and molten lithium at about 250 °C using sufficient molten lithium at 0 minutes, 3 minutes, 6 minutes, and 10 minutes.

**Fig. 5B** is a photograph of the reaction between ZnO and molten lithium at about 250 °C using a limited amount of molten lithium at 0 seconds, 20 seconds, 40 seconds, and 60 seconds.

**Fig. 6A** is a phase diagram of Li-Zn as a function of temperature and atomic percentage of zinc.

**Fig. 6B** is an X-ray diffraction pattern from the reaction product of ZnO and molten lithium using a sufficient amount (Bright) and a limited amount (Dark).

**Fig. 7A** is a Nyquist plot of Li | Garnet | Li symmetric cells without a ZnO surface coating and with a ZnO surface coating heated at 230 °C for 30 minutes and 300 °C for 30 minutes.

**Fig. 7B** is a Nyquist plot of Li | Garnet | Li symmetric cells with a ZnO surface coating heated to 300 °C before and after a stripping-plating test at a current density of 0.1 mA/cm$^2$.

**Fig. 8** is a line graph of voltage versus time of a Li | Garnet | Li symmetric cell during the stripping-plating test at a current density of 0.1 mA/cm$^2$.

**Fig. 9** is a schematic of the lithium infiltration into a porous solid state electrolyte garnet with or without surface modification.

**Fig. 10A** is a cross-section SEM image of a pristine $Li_{6.75}La_{2.75}Ca_{0.25}Zr_{1.75}Nb_{0.25}O_{12}$ solid state electrolyte with a porosity of 60-70%.

**Fig. 10B** is a cross-section SEM image of a lithium-infiltrated $Li_{6.75}La_{2.75}Ca_{0.25}Zr_{1.75}Nb_{0.25}O_{12}$ solid state electrolyte with a porosity of 60-70%.

**Fig. 11A** is a cross-section SEM image of a $Li_{6.75}La_{2.75}Ca_{0.25}Zr_{1.75}Nb_{0.25}O_{12}$ solid state electrolyte coated with a conformal ZnO surface layer using solution processing.

**Fig. 11B** is a cross-section SEM image of a $Li_{6.75}La_{2.75}Ca_{0.25}Zr_{1.75}Nb_{0.25}O_{12}$ solid state electrolyte coated with a conformal ZnO surface layer using solution processing infiltrated with lithium. As seen in **Fig. 11B** almost all pores have been filled with lithium metal. The inset shows the cross-section of SEM image with high magnification with the lithium metal area marked with a dashed line.

**Fig. 12** is an X-ray diffraction pattern of a $Li_{6.75}La_{2.75}Ca_{0.25}Zn_{1.75}Nb_{0.25}O_{12}$ solid state electrolyte and a standard $Li_5La_3Nb_2O_{12}$ phase.

**Fig. 13** is a cross-section SEM image of a $Li_{6.75}La_{2.75}Ca_{0.25}Zr_{1.75}Nb_{0.25}O_{12}$ solid state electrolyte.

## DETAILED DESCRIPTION OF THE INVENTION

As used herein, the singular terms "a" and "the" are synonymous and used interchangeably with "one or more" and "at least one," unless the language and/or context clearly indicates otherwise. As used herein, the term "comprising" means including, made up of, and composed of.

All numbers in this description indicating amounts, ratios of materials, physical properties of materials, and/or use are to be understood as modified by the word "about," except as otherwise explicitly indicated. The term "about" as used herein includes the recited number $\pm$ 10%. Thus, "about ten" means 9 to 11.

The term "metal compound" as used herein, refers to any metal from the alkali metals (e.g., Li, Na), the alkali earth metals (e.g., Mg, Ca), the transition metals (e.g., Fe, Zn), or the post-transition metals (e.g., Al, Sn). In some embodiments, the metal compound is Li, Na, K, Mg, or Al.

The term "metal salt" as used herein, refers to any compound that can be dissociated by solvents into metal ions and corresponding anions.

The "molality" (m) of a solution is defined as the amount of substance (in moles) of solute, $n_{solute}$, divided by the mass (in kg) of the solvent, $m_{solvent}$.

$$molality = n_{solute}/m_{solvent}$$

The unit for molality (m) is moles per kilogram (mol/kg).

The term "solvent" as used herein, refers to water (aqueous), non-aqueous compounds, or combinations thereof, that can help metal salts dissociate into metal ions and corresponding anions.

The term "non-aqueous solvent" as used herein, refers to an solvent composition that contains molecular solvents, ionic solvents, or combinations thereof. A non-aqueous solvent does not contain water.

The present invention is directed to solid state electrolyte material comprising:

(a) a solid state electrolyte; and
(b) a coating layer formed on the surface of the solid state electrolyte, wherein the coating layer comprises a metal, a metal oxide, or a metal alloy.

**Solid State Electrolyte**

The solid state electrolyte is defined according to the claims. As also disclosed but not claimed, the solid state electrolyte is not particularly limited as long as the solid state electrolyte has ion conductivity. In some embodiments, the solid state electrolyte (SSE) is a lithium-containing SSE, a sodium-containing SSE, or a magnesium-containing SSE.

As disclosed herein but not claimed, the SSE is a sodium-containing SSE. Optionally, the sodium-containing SSE is $Na_{1+x}Zr_2Si_xP_{3-x}O_{12}$ (NASICON), wherein $0 \le x \le 3$). Optionally, the sodium-containing SSE is sodium β-alumina.

As disclosed herein but not claimed, the SSE is a magnesium-containing SSE.

Optionally, the magnesium-containing SSE is $MgZr_4P_6O_{24}$.

According to the invention, the SSE is a lithium-containing SSE with a garnet structure.

Garnet structures have a general chemical formula of $A_3B_2(XO_4)_3$, where A, B, and X are eight, six, and four oxygen-coordinated sites, respectively. High Li-containing garnet structures contain more than three lithium per formula (e.g., $Li_7La_3Zr_2O_{12}$ and $Li_5La_3Ta_2O_{12}$) and most commonly crystallize in face centered cubic structures (space group Ia3d) but tetragonal polymorphs are also known. Early work with garnet lithium ionic conductors focused on compositions of $Li_5La_3M_2O_{12}$ (M = Ta, Nb) and doped compositions of $Li_6ALa_2M_2O_{12}$ (A = Ca, Sr, Ba; M = Ta, Nb). The highest conductivity for these compositions was around $10^{-5}$ S/cm at room temperature, which was not sufficiently high to use in a battery application. In 2007, the cubic garnet $Li_7La_3Zr_2O_{12}$ (LLZO) was successfully synthesized by Murugan, R., et al., Angew. Chem. 119:7925 (2007) and was shown to have a lithium ionic conductivity of about $10^{-4}$ S/cm at room temperature. LLZO is a promising solid electrolyte as it is highly conductive, yet appears to be stable against reduction by lithium metal, even when in direct contact with molten or evaporated lithium. (See Awaka, J., et al., J. Solid State Chem. 182:2360 (2009)). Two polymorphs of LLZO have been reported with the cubic phase having an ionic conductivity two orders of magnitude higher than that of the tetragonal phase. LLZO suffers from several problems including the difficulty of processing the materials due to the requirement of a temperature as high as 1230 °C for densificiation and the surface chemical instability during air exposure.

In some embodiments, the lithium-containing SSE with a garnet structure comprises a compound of formula I:

$$Li_AL_BG_CJ_DZr_EO_F \qquad (I)$$

where:

A is 4 to 8;
B is 1.5 to 4;
C is 0 to 2;
D is 0 to 2;
E is 0 to 2;
F is 10 to 13;
L is La or Y;
G is Al, Mo, W, Nb, Sb, Ca, Ba, Sr, Ce, Hf, Rb, or Ta; and
J is Al, Mo, W, Nb, Sb, Ca, Ba, Sr, Ce, Hf, Rb, or Ta;
wherein G and J are different.

In some embodiments, A is 4 to 8, 4 to 7, 4 to 6, 4 to 5, 5 to 8, 5 to 7, 5 to 6, 6 to 8, 6 to 7, or 7 to 8. In some embodiments, A is 6.5 to 7.5. In some embodiments, A is 7. In some embodiments, B is 1.5 to 4, 1.5 to 3, 1.5 to 2, 2 to 4, 2 to 3, or 3 to 4. In some embodiments, B is 2.5 to 3.5. In some embodiments, B is 2.75. In some embodiments, C is 0 to 2, 0 to 1, or 1 to 2. In some embodiments, C is 0.25 to 1. In some embodiments, C is 0.25. In some embodiments, D is 0 to 2, 0 to 1, or 1 to 2. In some embodiments, D is 0.25 to 1. In some embodiments, D is 0.25. In some embodiments, E is 0 to 2, 0 to 1, or 1 to 2. In some embodiments, E is 1.5 to 2. In some embodiments, E is 1.75. In some embodiments, F is 10 to 13, 10 to 12, 10 to 11, 11 to 13, 11 to 12, or 12 to 13. In some embodiments, F is 12.

In some embodiments, L is La. In some embodiments, L is Y.

In some embodiments, G is Ca, Sr, or Ba.

In some embodiments, J is Ta, Nb, Sb, or Si.

In some embodiments, the lithium-containing SSE with a garnet structure comprises $Li_5La_3Nb_2O_{12}$, $Li_5La_3Ta_2O_{12}$, $Li_7La_3Zr_2O_{12}$, $Li_6La_2SrNb_2O_{12}$, $Li_6La_2BaNb_2O_{12}$, $Li_6La_2SrTa_2O_{12}$, $Li_6La_2BaTa_2O_{12}$, $Li_7Y_3Zr_2O_{12}$, $Li_{6.4}Y_3Zr_{1.4}Ta_{0.6}O_{12}$, $Li_{65}La_{25}Ba_{05}TaZrOi2$, $Li_{6.7}BaLa_2Nb_{1.75}Zn_{0.25}O_{12}$, $Li_{6.75}BaLa_2Ta_{1.75}Zn_{0.25}O_{12}$, or $Li_{6.75}La_{2.75}Ca_{0.25}Zr_{1.75}Nb_{0.25}O_{12}$. In some embodiments, the solid state electrolyte is $Li_{6.75}La_{2.75}Ca_{0.25}Zr_{1.75}Nb_{0.25}O_{12}$.

In some embodiments, the solid state electrolyte has a dense region that is free of the cathode material and anode material. In some embodiments, the solid state electrolyte has a dense region and at least one porous region.

In some embodiments, the thickness of the solid state electrolyte can be determined using methods known to one of ordinary skill in the art. In some embodiments, the thickness of the solid state electrolyte can be determined using transmission electron microscopy.

In some embodiments, the thickness of the solid state electrolyte is between about 1 $\mu$m and about 100 $\mu$m. In some embodiments, the thickness of the solid state electrolyte is between about 1 $\mu$m and about 100 $\mu$m, about 1 $\mu$m and about 75 $\mu$m, about 1 $\mu$m and about 50 $\mu$m, about 1 $\mu$m and about 25 $\mu$m, about 1 $\mu$m and about 10 $\mu$m, about 1 $\mu$m and about 5 $\mu$m, about 5 $\mu$m and about 100 $\mu$m, about 5 $\mu$m and about 75 $\mu$m, about 5 $\mu$m and about 50 $\mu$m, about 5 $\mu$m and about 25 $\mu$m, about 5 $\mu$m and about 10 $\mu$m, about 10 $\mu$m and about 100 $\mu$m, about 10 $\mu$m and about 75 $\mu$m, about 10 $\mu$m and about 50 $\mu$m, about 10 $\mu$m and about 25 $\mu$m, about 25 $\mu$m and about 100 $\mu$m, about 25 $\mu$m and about 75 $\mu$m, about 25 $\mu$m and about 50 $\mu$m, about 50 $\mu$m and about 100 $\mu$m, about 50 $\mu$m and about 75 $\mu$m, or about 75 $\mu$m and about 100 $\mu$m.

In some embodiments, the ionic conductivity of the solid state electrolyte can be determined using methods known to one of ordinary skill in the art. In some embodiments, the ionic conductivity of the solid state electrolyte can be determined by applying a direct current.

In some embodiments, the solid state electrolyte has an ionic conductivity of between about $10^{-7}$ S/cm and about $10^{-2}$ S/cm. In some embodiments, the solid state electrolyte has an ionic conductivity between about $10^{-7}$ S/cm and about $10^{-2}$ S/cm, about $10^{-7}$ and about $10^{-3}$ S/cm, about $10^{-7}$ and about $10^{-4}$ S/cm, about $10^{-7}$ and about $10^{-5}$ S/cm, about $10^{-5}$ S/cm and about $10^{-2}$ S/cm, about $10^{-5}$ and about $10^{-3}$ S/cm, about $10^{-5}$ and about $10^{-4}$ S/cm, about $10^{-4}$ S/cm and about $10^{-2}$ S/cm, about $10^{-4}$ and about $10^{-3}$ S/cm, or about $10^{-5}$ S/cm and about $10^{-7}$ S/cm.

**Coating Layer**

The coating layer is formed on the surface of the solid state electrolyte. As disclosed herein but not claimed, the coating layer is not particularly limited as long as the layer contains a metal.

As disclosed herein but not claimed, the coating layer is a metal, a metal oxide, or a metal alloy.

As disclosed herein but not claimed, coating layer is a metal. In some embodiments, the coating layer is a metal selected from the group consisting of Zn, Sn, Al, Si, Ge, Ga, Cu, Fe, Ti, Ni, Mg, Sb, Bi, Au, Ag, and In.

As disclosed herein but not claimed, the coating layer is a metal oxide. In some embodiments, the metal oxide is an oxide of the metal Zn, Sn, Al, Si, Ge, Ga, Cu, Fe, Ti, Ni, Mg, Sb, Bi, Au, Ag, In, or combinations thereof. The metal oxide may be selected from the group consisting of $ZnO$, $ZnO_2$, $SnO$, $SnO_2$, $Al_2O_3$, $SiO_2$, $GeO$, $GeO_2$, $GaO$, $Ga_2O_3$, $V_2O_3$, $V_2O_5$, $VO_2$, $CuO$, $CuO_2$, $FeO$, $Fe_2O_3$, $TiO$, $TiO_2$, $NiO$, $Ni_2O_3$, $Li_2PO_2N$, $CoO_2$, $Co_2O_3$, $Sb_2O_3$, $Sb_2O_5$, $Bi_2O_5$, and $Bi_2O_3$. According to the invention, the metal oxide is ZnO.

In some embodiments, the metal oxide is prepared by direct pyrolysis of a metal salt or base. In some embodiments the metal salt or base is a metal nitrate, a metal chloride, a metal sulfate, or a metal hydroxide. In some embodiments, the metal oxide is prepared by direct pyrolysis of a Zn nitrate salt.

As disclosed herein but not claimed, the coating layer is a metal alloy. Optionally, the metal alloy comprises a metal that can alloy with Li. Optionally, the metal that can alloy with Li is Zn, Sn, Al, Si, Ge, Ga, Cu, Fe, Ti, Ni, Mg, Sb, Bi, Au, Ag, In, or combinations thereof. In some embodiments, the metal alloy is a Li-Zn alloy. Optionally, the Li-Zn alloy is LiZn. In some embodiments, the metal alloy is a Li-Si alloy. Optionally, the Li-Si alloy is $Li_{22}Si_5$.

As disclosed herein but not claimed, the metal alloy is a Li-Sn alloy. Optionally, the Li-Sn alloy is $Li_{17}Sn_4$, $Li_{13}Sn_5$, $Li_7Sn_2$, or LiSn.

As disclosed herein but not claimed, the metal alloy comprises a metal that can alloy with Na. Optionally, the metal that can alloy with Na is Zn, Sn, Al, Si, Ge, Ga, Cu, Fe, Ti, Ni, Mg, Sb, Bi, Au, Ag, In, or combinations thereof.

In some embodiments, the thickness of the coating layer can be determined using methods known to one of ordinary skill in the art. In some embodiments, the thickness of the coating layer can be determined using transmission electron microscopy.

In some embodiments, the thickness of the coating layer is between about 1 nm and about 100 nm. In some embodiments, the thickness of the coating layer is between about 1 nm and about 100 nm, about 1 nm and about 75 nm, about 1 nm and about 50 nm, about 1 nm and about 25 nm, about 1 nm and about 10 nm, about 1 nm and about 5 nm, about 5 nm and about 100 nm, about 5 nm and about 75 nm, about 5 nm and about 50 nm, about 5 nm and about 25 nm, about 5 nm and about 10 nm, about 10 nm and about 100 nm, about 10 nm and about 75 nm, about 10 nm and about 50 nm, about 10 nm and about 25 nm, about 25 nm and about 100 nm, about 25 nm and about 75 nm, about 25 nm and about 50 nm, about 50 nm and about 100 nm, about 50 nm and about 75 nm, or about 75 nm and about 100 nm.

In some embodiments, the surface coverage of the solid state electrolyte with the coating layer can be determined using methods known to one of ordinary skill in the art. In some embodiments, the surface coverage of the solid state electrolyte with the coating layer can be determined using X-ray photoelectron spectroscopy.

In some embodiments, the surface coverage of the solid state electrolyte with the coating layer is between about 40% and about 100%. In some embodiments, the surface coverage of the solid state electrolyte with the coating layer is between about 40% and about 100%, about 40% and about 90%, about 40% and about 80%, about 40% and about 60%, about 60% and about 100%, about 60% and about 90%, about 60% and about 80%, about 80% and about 100%, about 80% and about 90%, or about 90% and about 100%.

## Preparation of the Solid State Electrolyte Material

The solid state electrolyte material comprises the solid state electrolyte and a coating layer. The coating layer can be applied to the solid state electrolyte using any method known to those of ordinary skill in the art.

In some embodiments, the coating layer is applied using atomic layer deposition (ALD), plasma-enhanced ALD, chemical vapor deposition (CVD), low pressure CVD, plasma-enhanced CVD, physical vapor deposition (PVD), epitaxy processes, electrochemical plating process, electroless deposition, or combinations thereof.

In some embodiments, the coating layer is applied using ALD. ALD is conventionally used to deposit smooth and conformal coatings from the gas phase onto surfaces.

In some embodiments, the coating layer is applied using a solution process. In some embodiments, the solution process comprises the direct dropping of a solution comprising the coating layer onto the solid state electrolyte.

In some embodiments, the coating layer is applied to the solid state electrolyte using a solution comprising the coating layer and a solvent. In some embodiments, the solvent is selected from the group consisting of acetone, acetonitrile, benzene, chloroform, diethyl ether, dimethylformamide, dimethyl sulfoxide, ethanol, ethyl acetate, hexane, isopropyl alcohol, methanol, methylene chloride, pyridine, tetrahydrofuran, toluene, water, or combinations thereof. In some embodiments, the solvent is ethanol.

In some embodiments, after application of the coating layer, the solid state electrolyte material is dried at a temperature between about 50 °C and about 300 °C, 50 °C and about 200 °C, about 50 °C and about 150 °C, about 50 °C and about 125 °C, about 50 °C and about 100 °C, about 50 °C and about 75 °C, about 75 °C and about 300 °C, about 75 °C and about 200 °C, about 75 °C and about 150 °C, about 75 °C and about 125 °C, about 75 °C and about 100 °C, about 100 °C and about 300 °C, about 100 °C and about 200 °C, about 100 °C and about 150 °C, about 100 °C and about 125 °C, about 125 °C and about 300 °C, about 125 °C and about 200 °C, about 125 °C and about 150 °C, about 150 °C and about 300 °C, about 150 °C and about 200 °C, or about 200 °C and about 300 °C. In some embodiments, after application of the coating layer, the solid state electrolyte material is dried at a temperature between about 75 °C and about 125 °C.

In some embodiments, after application of the coating layer, the solid state electrolyte material is dried for between about 2 minutes and about 24 hours, about 2 minutes and about 10 hours, about 2 minutes and about 5 hours, about 2 minutes and about 1 hour, about 2 minutes and about 30 minutes, about 30 minutes and about 24 hours, about 30 minutes and about 10 hours, about 30 minutes and about 5 hours, about 30 minutes and about 1 hour, about 1 hour and about 24 hours, about 1 hour and about 10 hours, about 1 hour and about 5 hours, about 5 hours and about 24 hours, about 5 hours and about 10 hours, or about 10 hours and about 24 hours.

In some embodiments, after the coating layer is dried, the solid state electrolyte material is annealed at a temperature between about 100 °C and about 1000 °C, about 100 °C and about 700 °C, about 100 °C and about 600 °C, about 100 °C and about 500 °C, about 100 °C and about 400 °C, about 400 °C and about 1000 °C, about 400 °C and about 700 °C, about 400 °C and about 600 °C, about 400 °C and about 500 °C, about 500 °C and about 1000 °C, about 500 °C and about 700 °C, about 500 °C and about 600 °C, about 600 °C and about 1000 °C, about 600 °C and about 700 °C, or about 700 °C and about 1000 °C. In some embodiments, after application of the coating layer, the solid state electrolyte material is dried at a temperature between about 400 °C and about 600 °C.

In some embodiments, after the coating layer is dried, the solid state electrolyte material is annealed for between about 2 minutes and about 24 hours, about 2 minutes and about 10 hours, about 2 minutes and about 5 hours, about 2 minutes and about 1 hour, about 2 minutes and about 30 minutes, about 30 minutes and about 24 hours, about 30 minutes and about 10 hours, about 30 minutes and about 5 hours, about 30 minutes and about 1 hour, about 1 hour and about 24 hours, about 1 hour and about 10 hours, about 1 hour and about 5 hours, about 5 hours and about 24 hours, about 5 hours and about 10 hours, or about 10 hours and about 24 hours. In some embodiments, after the coating layer is dried, the solid state electrolyte material is annealed for between about 2 minutes and about 30 minutes.

## Properties of the Solid State Electrolyte Materials

In some embodiments, the solid state electrolyte materials have a lower surface interface resistance (SIR) than a solid state electrolyte without a coating layer.

In some embodiments, the surface interface resistance of the solid state electrolyte material can be measured using methods known to one of ordinary skill in the art. In some embodiments, the interface resistance of the solid state electrolyte material can be measured using electrochemical impedance spectroscopy (EIS).

In some embodiments, the surface interface resistance of the solid state electrolyte material is between about 10 $\Omega \cdot cm^2$ and about 1200 $\Omega \cdot cm^2$, about 10 $\Omega \cdot cm^2$ and about 800 $\Omega \cdot cm^2$, about 10 $\Omega \cdot cm^2$ and about 400 $\Omega \cdot cm^2$, about

10 $\Omega \cdot cm^2$ and about 100 $\Omega \cdot cm^2$, about 10 $\Omega \cdot cm^2$ and about 50 $\Omega \cdot cm^2$, about 10 $\Omega \cdot cm^2$ and about 20 $\Omega \cdot cm^2$, about 20 $\Omega \cdot cm^2$ and about 1200 $\Omega \cdot cm^2$, about 20 $\Omega \cdot cm^2$ and about 800 $\Omega \cdot cm^2$, about 20 $\Omega \cdot cm^2$ and about 400 $\Omega \cdot cm^2$, about 20 $\Omega \cdot cm^2$ and about 100 $\Omega \cdot cm^2$, about 20 $\Omega \cdot cm^2$ and about 50 $\Omega \cdot cm^2$, about 50 $\Omega \cdot cm^2$ and about 1200 $\Omega \cdot cm^2$, about 50 $\Omega \cdot cm^2$ and about 800 $\Omega \cdot cm^2$, about 50 $\Omega \cdot cm^2$ and about 400 $\Omega \cdot cm^2$, about 50 $\Omega \cdot cm^2$ and about 100 $\Omega \cdot cm^2$, 100 $\Omega \cdot cm^2$ and about 1200 $\Omega \cdot cm^2$, about 100 $\Omega \cdot cm^2$ and about 800 $\Omega \cdot cm^2$, about 100 $\Omega \cdot cm^2$ and about 400 $\Omega \cdot cm^2$, about 400 $\Omega \cdot cm^2$ and about 1200 $\Omega \cdot cm^2$, about 400 $\Omega \cdot cm^2$ and about 800 $\Omega \cdot cm^2$, or about 800 $\Omega \cdot cm^2$ and about 1200 $\Omega \cdot cm^2$. In some embodiments, the surface interface resistance of the solid state electrolyte material is between about 20 $\Omega \cdot cm^2$ and about 100 $\Omega \cdot cm^2$.

In some embodiments, increasing the temperature applied to the solid state electrolyte material causes a decrease in the surface interface resistance. In some embodiments, increasing the temperature applied to the solid state electrolyte material to between about 200 °C and about 350 °C causes the surface interface resistance of the solid state electrolyte material to decrease. In some embodiments, increasing the temperature applied to the solid state electrolyte material to between about 200 °C and about 350 °C, about 200 °C and about 310°C, about 200 °C and about 250°C, about 250 °C and about 350 °C, about 250 °C and about 310 °C, or about 310 °C and about 350 °C causes the surface interface resistance of the solid state electrolyte material to decrease.

## Solid State Battery

In some embodiments, the solid state electrolyte material is used to produce a solid state battery. In some embodiments, the solid state battery comprises a cathode active material layer, an anode active material layer, and a solid state electrolyte material formed between the cathode active material layer and the anode active material layer.

The solid state battery of the present invention is a lithium solid state battery. Other solid state batteries disclosed herein but not claimed include, a sodium solid state battery, a potassium solid state battery, a magnesium solid state battery, and a calcium solid state battery. The solid state battery of the present invention can be either a primary battery or a secondary battery. In some embodiments, the solid state battery is a secondary battery. A secondary battery can be repeatedly charged and discharged, and is useful as, for example, an in-vehicle battery. Examples of the shape of the solid state battery include, for example, a coin type, a laminated type, a cylindrical type, or a rectangular type. The method for producing the solid state battery is not limited and can be produced using methods known to one of ordinary skill in the art.

## Cathode Active Material Layer

The cathode active material layer is a layer containing at least a cathode active material, and can further comprise a conductive material, a binder, or combinations thereof. The type of the cathode active material is appropriately selected depending on the type of the solid state battery, and examples of the cathode active material include an oxide active material and a sulfide active material. Examples of a cathode active material for use in lithium solid state batteries include: layered cathode active materials such as $LiCoO_2$, $LiNiO_2$, $LiCo_{0.33}Ni_{0.33}Mno._{33}O_2$, $LiVO_2$, and $LiCrO_2$; spinal type cathode active materials such as $LiMn_2O_4$, $Li(Ni_{0.25}Mn_{0.75})_2O_4$, $LiCoMnO_4$, and $Li_2NiMn_3O_8$; olivine type cathode active materials such as $LiCoPO_4$, $LiMnPO_4$, and $LiFePO_4$; and NASICON type cathode active materials such as $Li_3V_2P_3O_{12}$.

## Anode Active Material Layer

The anode active material layer is a layer containing at least an anode active material and can further comprise a conductive material, a binder, and combinations thereof. The type of the anode active material is not particularly limited, and examples of the anode active material include a carbon active material, an oxide active material, and a metal active material. Examples of the carbon active material include mesocarbon microbeads (MCMB), highly-oriented graphite (HOPG), hard carbon, and soft carbon. Examples of the oxide active material include $Nb_2O_5$, $Li_4Ti_5O_{12}$, and SiO. Examples of the metal active material include In, Al, Si, and Sn.

## Other Components

The solid state battery may further include a cathode current collector that collects current from the cathode active material layer and an anode current collector that collects current from the anode active material layer. Examples of a material of the cathode current collector include SUS, aluminum, nickel, iron, titanium, and carbon. Examples of a material of the anode current collector include SUS, copper, nickel, and carbon. Further, for a battery case used in the present invention, one commonly used for solid state batteries may be used. An example of such a battery case includes a SUS battery case.

EXAMPLES

The following examples are illustrative and non-limiting, of the products and methods described herein. Suitable modifications and adaptations of the variety of conditions, formulations, and other parameters normally encountered in the field and which are obvious to those skilled in the art in view of this disclosure are within scope of the invention.

Example 1

**Formulating $Li_{6.75}La_{2.75}Ca_{0.25}Zr_{1.75}Nb_{0.25}O_{12}$ (LLCZN)**

LLCZN can be formulated using a sol-gel method as described in Han, X., et al., Nature Materials 16:572-580 (2017). The starting materials were $La(NO_3)_3$ (99.9%, Alfa Aesar), $ZrO(NO_3)_2$ (99.9%, Alfa Aesar), $LiNO_3$ (99%, Alfa Aesar), $NbCl_5$ (99.99%, Alfa Aesar), and $Ca(NO_3)_2$ (99.9%, Sigma Aldrich). Stoichiometric amounts were ball milled in isopropanol for 24 hours and 10% excess of $LiNO_3$ was added to compensate for lithium volatilization during the calcination and sintering processes. The well-mixed precursors were dried, pressed, and calcined at 900 °C for 10 hours. The as-calcined pellets were broken down and ball milled in isopropanol for 48 hours. The dried powders were pressed into 12.54 mm diameter pellets at 500 MPa. The pellets were fully covered by the mother powder and sintered at 1050 °C for 12 hours. All the thermal processes were carried out in alumina crucibles. Before subsequent lithium metal assembling, the garnet electrolyte was mechanically polished on both sides to produce clean and flat surfaces.

Example 2

**ALD of the ZnO coating**

Deposition of the ZnO surface coating was performed using atomic layer deposition (ALD) with a Beneq TFS 500. Pure nitrogen was used as a carrier gas and the coating was preheated to 150 °C for the entire process. Typically, 5 ALD cycles were performed to produce 1 nm of ZnO deposition. Each cycle included alternating flows of diethyl zinc (1.5 seconds, Zn precursor) and water (1.5 seconds, oxidant) separated by flows of pure nitrogen gas (4 and 10 seconds, as carrier and cleaning gas, respectively).

Example 3

**Modification of the Amount of Lithium Metal**

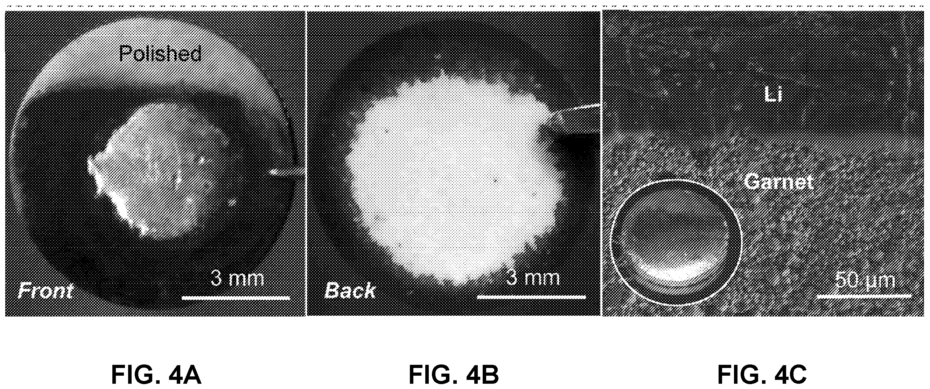

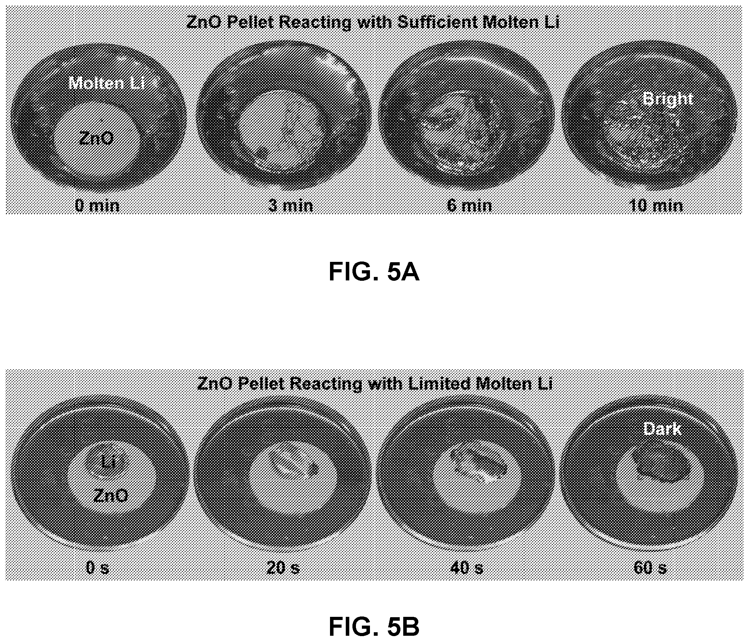

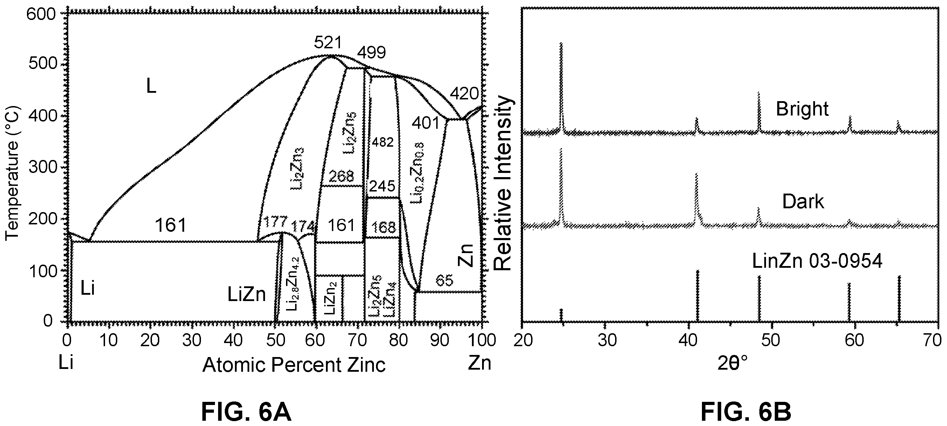

To better understand the mechanism of the wetting process, pure ZnO pellets pressed from ZnO nanoparticles were used to study the reaction with molten lithium. According to the images shown in FIG. 5A, after contacting the ZnO pellet at ~250 °C, the molten lithium quickly wetted and corroded the ZnO. After about 10 minutes, almost all of the molten lithium was absorbed by the ZnO pellet, while most of the ZnO was reduced to zinc metal which alloyed with the lithium. The amount of lithium present was more than sufficient to reduce ZnO to zinc metal and form a LiZn alloy. Therefore, even though ZnO partially oxidized the lithium, the final product still exhibited a shiny metallic color. As shown in FIG. 5B, a limited amount of lithium was used to react with the pressed ZnO pellet, where the lithium quickly wetted the surface of the ZnO pellet and then was fully absorbed by the pellet in about 1 minute. The final product produced was much darker than the one prepared using a greater amount of molten lithium. The dark product also agrees with the black lithiated ZnO coating on the garnet surface at room temperature (FIGs. 4A and 4B). According to the Li-Zn phase diagram shown in FIG. 6A, there are many alloy phases for lithium and zinc that exist for different ratios of the metals. To identify the composition of the final products, X-ray diffraction was performed. The pattern labelled "Bright" in FIG. 6B is the shiny product of FIG. 5A and the pattern labelled "Dark" in FIG. 6B is the dark product of FIG. 5B. Although the relative intensities of the peaks are different, the patterns can be indentified as the LiZn alloy phase, which is the most lithium-rich alloy phase on the Li-Zn phase diagram (FIG. 6A). Therefore, the difference of color is believed to be caused by the various sizes and shapes of the LiZn grains instead of from variation of the composition because the amount of lithium and reaction time differ significantly to affect the growth of LiZn grains.
These results demonstrate a continuous and firm contact between the lithium metal and the garnet electrolyte due to the excellent reactivity and wettability of the ultrathin ZnO coating with molten lithium.

Example 4

**Assembly of Symmetric Cell**

To produce Li | Garnet | Li symmetric cells, the ZnO-coated garnet pellet was sandwiched between two thin lithium disks (~0.5 cm in diameter and 150 $\mu$m thick). The pellet was heated between 230-300 °C for 30 minutes in an argon filled glovebox. During heating, three pieces of stainless steel coin spacers were used to press the molten lithium onto the garnet surface to ensure a good contact between the molten lithium and the garnet surface. For a control sample, lithium metal was applied using the same process to the surface-polished pristine garnet (i.e., a garnet without a ZnO coating).

Example 5

**Properties of the Symmetric Cell**

Ensuring good electrochemical behavior of these materials, as the anode and electrolyte in lithium battery applications, is also critical.

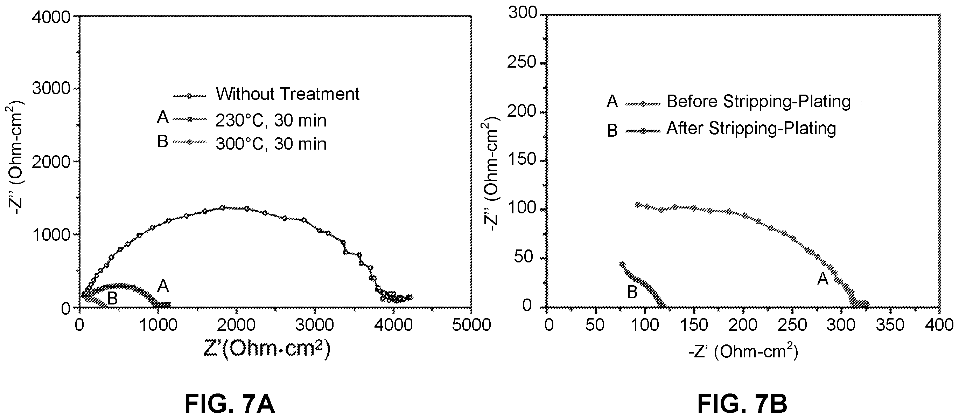

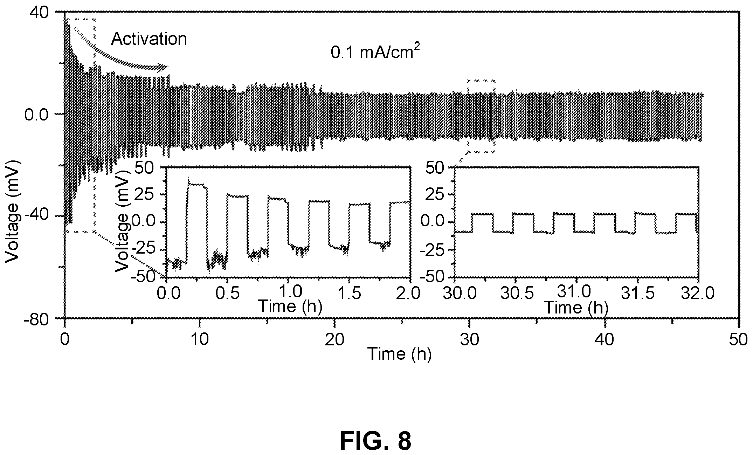

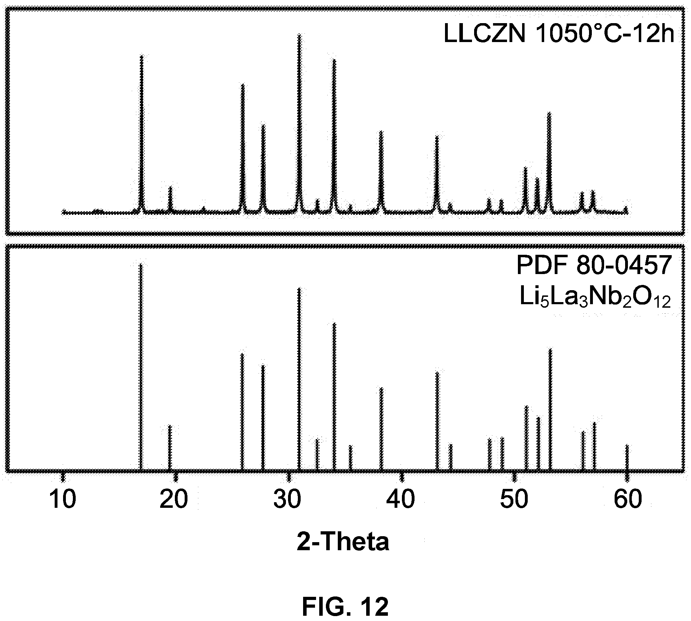

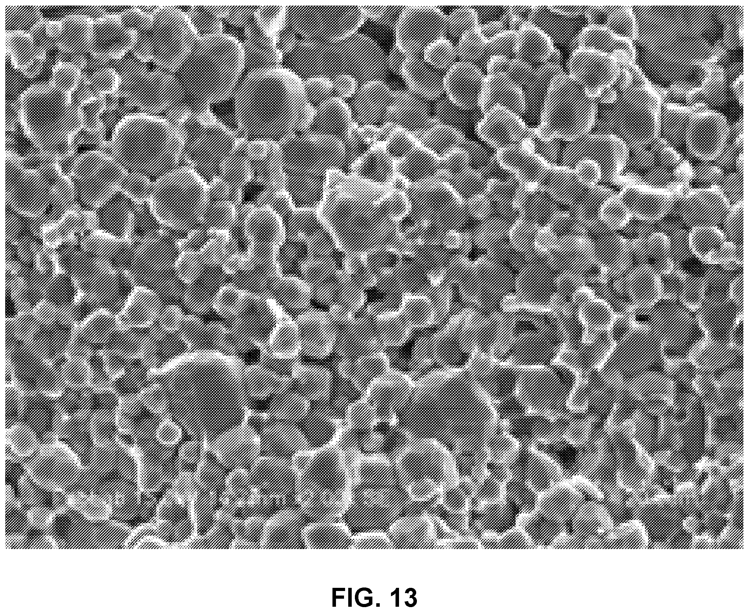

To further study the interface properties during the electrochemical process, the Li | Garnet | Li symmetric cell of Example 4 was studied using electrochemical measurement. The conductivity of the garnet electrolyte used was measured to be about $2.2 \times 10^{-4}$ S/cm. The morphology of the garnet electrolyte can be seen in the cross-section SEM image shown in FIG. 13. The crystallographic structure of the cell was determined to be cubic garnet phase, according to the XRD patterns (FIG. 12). Two ~0.2 cm$^2$ area circular pieces of lithium were punched from lithium metal sheet pressed from a clean lithium pellet and melted onto a ~0.5 cm$^2$ garnet surface that had been coated with -10 nm ZnO using ALD. Electrochemical impedance spectroscopy (EIS) was used to measure the interfacial resistance between lithium and the garnet solid state electrolyte. FIG. 7A shows the Nyquist plots of the Li | Garnet | Li symmetric cells treated using different conditions. The specific interfacial resistant (SIR) is calculated from the value of the real axis of the semicircle of the Nyquist plot at low frequency. After subtracting the bulk resistance (~90 $\Omega \cdot$cm$^2$) of the garnet electrolyte (~200 $\mu$m thick), two Li/Garnet interfaces were considered, one either side of the cell, and it was determined that the SIR is half of the remaining resistance multiplied by the area of the electrode materials. For the sample without surface treatment, the SIR is as high as 1900 $\Omega \cdot$cm$^2$ after annealing at 300 °C for 30 minutes as shown in TABLE 1. With a 10 nm ZnO surface modification layer, the SIR drops dramatically to about 450 $\Omega \cdot$cm$^2$, even with heating temperatures as low as 230 °C. In this case, the ZnO coating is believed to have been pre-lithiated to form the dark phase as seen in FIG. 4A and 5B, which was found to have a lower electrical conductivity (~k$\Omega$/□ for the dark litihiated ZnO coating in FIG. 4A) than the shiny lithium-rich alloy phase in FIG. 5A. The oxygen from the conformal ZnO coating may also cause some oxidation in the lithium to form Li$_2$O and slow down lithium diffusion into the interface layer. Additionally, after further heating at 300 °C for 30 minutes, the interface became fully lithiated to the lithium-rich alloy phase, and the SIR decreased to as low as ~100 $\Omega \cdot$cm$^2$ (TABLE 1), which is almost 20 times lower than the SIR for samples without surface treatment. Galvanostatic cycling was performed on the cells, where lithium was plated back and forth between the two electrodes at a constant current density of 0.1 mA/cm$^2$. After about 50 hours of stripping-plating cycles, the interfacial resistance further decreased to about 20 $\Omega \cdot$cm$^2$ (TABLE 1). This decrease could be attributed to the further lithiated and activation of the interface layer during the stripping-plating process, which agrees with the findings of Sharafi, A., et al., J. Power Sources 302:135-139 (2016). The interface activation process can be seen from the voltage profile of the stripping-plating (FIG. 8), where the voltage slowly decreases from about 40 mV to ~10mV in the first 10 hours and then becomes stable.

**TABLE 1. Bulk and Interfacial Resistance of a 200 $\mu$m Garnet Pellet**

| Bulk Resistance ($\Omega \cdot$cm$^2$) | SIR Without Treatment ($\Omega \cdot$cm$^2$) | SIR With ZnO, 230 °C ($\Omega \cdot$cm$^2$) | SIR With ZnO, 300 °C ($\Omega \cdot$cm$^2$) | SIR With ZnO, 300 °C, cycled ($\Omega \cdot$cm$^2$) |
|---|---|---|---|---|
| 90 | 1900 | 450 | 100 | 20 |

Example 6

**Solution-Based Surface Coating**

Surface modification of a garnet by a solution process was performed by dropping -40 $\mu$L of a 100 mg/mL Zn(NO$_3$)$_2$ in ethanol solution onto the porous garnet pellet (800 $\mu$m thick, 0.8 cm in diameter, porosity of ~65%). The garnet was then dried at ~100 °C to form a uniform layer. Then, the surface-coated porous garnet was annealed in an argon-filled glovebox at ~500 °C for about 10 minutes. During this time, the $Zn(NO_3)_2$ decomposed into a ZnO coating. Finally, the ZnO-coated porous garnet was placed in molten lithium at about 250 °C, where the molten lithium was allowed to infiltrate the porous garnet.

Example 7

**Properties of Electrolytes Coated Using Solution-Based Surface Coating**

Using ALD, it is possible to achieve much greater thickness control of the ZnO coating layer. ALD is also an effective method for 3D conformal coating of the porous structure. For large-scale, cost-effective manufacturing, the solution-based process can also be used.

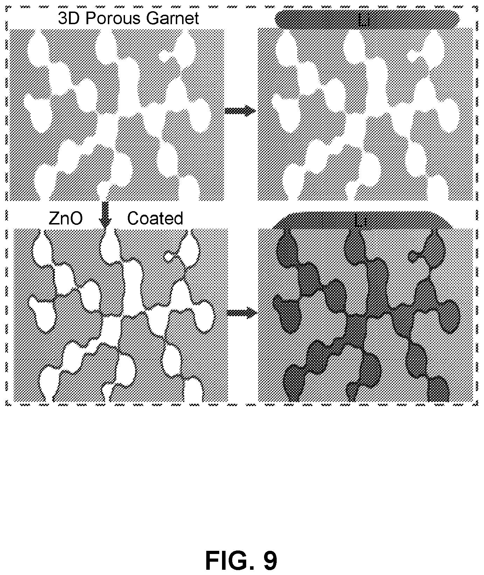

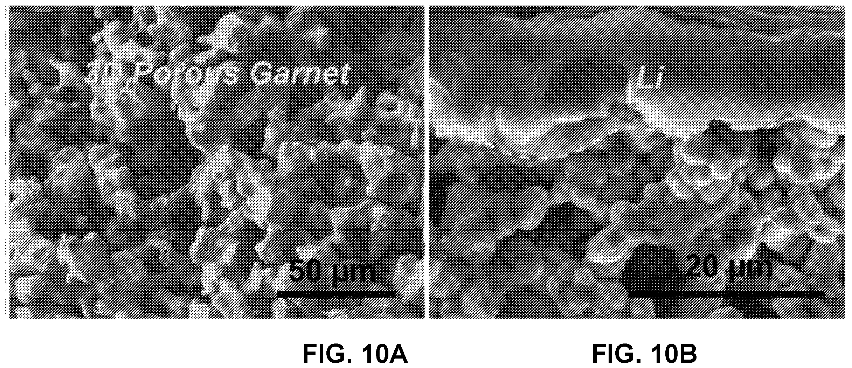

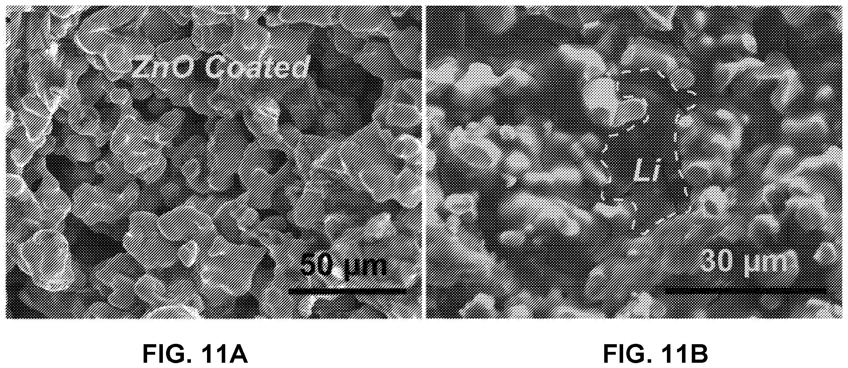

As as common metal oxide, ZnO can be prepared from the direct pyrolysis of the zinc nitrate salt which can be coated onto the surface of the garnet electrolyte in solution. The advantage of the solution process is that it can easily access the internal porous structure of the garnet due to the capillary effect and can form a conformal layer, which then makes it possible to infiltrate with lithium metal. Considering the volume change of the lithium anode during the charge-discharge process of the lithium battery, a supporting material is necessary to maintain the structure of the battery and good contact between the lithium anode and the electrolyte. For this reason, a porous, ionically conductive solid state electrolyte would be an ideal supporting material for the lithium anode, since the porous structure can offer more contact surface for the lithium and further decrease the interfacial resistance while maintaining the volume of the anode. However, due to poor wettability between molten lithium and the solid state electrolyte, it is difficult to directly infiltrate lithium into the porous garnet without surface modification. Even with surface treatment, most surface modification techniques cannot easily coat the surface of a porous structure having high tortuosity. Using the solution process, the inner surface of the porous structure can be uniformly coated, and the coating process can be easily performed at large scale. FIG. 9 shows a schematic of lithium infiltration into the porous garnet with or without surface treatment, while FIGs. 10A, 10B, 11A, and 11B are the corresponding cross-section SEM images. The porous garnet consists of many interconnected micro-sized pores (FIG. 10A), which cannot be wetted and infiltrated by the molten lithium due to high tortuosity. In FIG. 10B, most of the lithium remains on the surface of the porous garnet without infiltrating the inner pores. Using the solution process, the porous garnet was conformably coated with a thin layer of ZnO by soaking in 100 mg/mL $Zn(NO_3)_2$ solution followed with calcining at 500 °C for 10 minutes. After being coated with the ZnO surface modification layer, the porous structure of the garnet electrolyte still remains (FIG. 11A). From the SEM images in FIG. 11B and its inset, we can clearly see that almost all of the pores have been filled with lithium metal, indicating that the ZnO coating layer can significantly improve the wettability of the garnet electrolyte for lithium metal. Since it is difficult to obtain the surface area of the porous garnet, the SIR between Li metal and garnet was not studied. However, it is expected that there will be a reduction in the interfacial resitance similar to that of Li metal and ZnO-coated dense garnet electrolyte pellet.

Example 8

**Characterization of the Garnet Solid State Electrolytes**

Observation of the morphologies of the garnet solid state electrolytes and elemental mapping of the samples were conducted using a Hitachi SU-70 FEG-SEM at 10 kV. Phase analysis was performed by X-ray diffraction (XRD) on a C2 Discover diffractometer (Bruker AXS, WI, USA) using a Cu K$\alpha$ radiation source operated at 40 kV and 40 mA.

Example 9

**Electrochemical Measurements**

Electrochemical tests were conducted on a BioLogic VMP3 potentiostat. The electrochemical impedance spectra (EIS) were measured in the frequency range of 100 mHz to 1 MHz with a 30 mV AC amplitude. Galvanostatic stripping-plating cycling of the symmetric cells was recorded at a current density of 0.1 mA/cm$^2$. All measurements were conducted in an argon-filled glovebox.

While various embodiments of the present invention have been described above, it should be understood that they have been presented by way of example only, and not limitation. It will be apparent to persons skilled in the relevant art that various changes in form and detail can be made therein without departing from the scope of the invention. Thus, the breadth and scope of the present invention should not be limited by any of the above-described exemplary embodiments, but should be defined only in accordance with the following claims.

All publications, patents, and patent applications mentioned in this specification are indicative of the level of skill of those skilled in the art to which this invention pertains.

**Claims**

1. A solid state electrolyte material comprising:

   a solid state electrolyte (SSE); and
   a coating layer of ZnO,
   wherein the SSE comprises a plurality of pores in a 3D porous structure configured to contain an anode active material, the coating layer coats a surface of the pores , wherein the SSE is lithium-containing SSE with a garnet structure and the anode active material is lithium metal and the coating layer increases contact between the SSE material and the anode material.

2. The solid state electrolyte material of claim 1, wherein a surface coverage of the solid electrolyte by the coating layer is between 40% and 100%.

3. The solid state electrolyte material of claim 1 or claim 2, wherein the solid state electrolyte has the formula I:

$$Li_A L_B G_C J_D Zr_E O_F \qquad (I)$$

wherein:

   A is 4 to 8;
   B is 1.5 to 4;
   C is 0 to 2;
   D is 0 to 2;
   E is 0 to 2;
   F is 10 to 13;
   L is Y or La;
   G is Al, Mo, W, Nb, Sb, Ca, Ba, Sr, Ce, Hf, Rb, or Ta; and
   J is Al, Mo, W, Nb, Sb, Ca, Ba, Sr, Ce, Hf, Rb, or Ta;

   wherein G and J are different.

4. The solid state electrolyte material of claim 1 or claim 2, wherein the SSE is $Li_{6.75}La_{2.75}Ca_{0.25}Zr_{1.75}Nb_{0.25}O_{12}$.

5. The solid state electrolyte material of any one of claims 1-4, wherein the thickness of the coating layer is between 1 nm and 100 nm.

6. The solid state electrolyte material of any one of claims 1-5, wherein the surface coverage of the solid electrolyte by the coating layer is between 80% and 100%.

7. A solid state battery comprising:

   a cathode active material layer;
   an anode active material layer; and
   the solid state electrolyte material of any one of claims 1-6.

8. The battery of claim 7, wherein the coating provides the solid state electrolyte material with a surface interface resistance of between 10 $\Omega$-cm$^2$ and 1200 $\Omega$-cm$^2$.

9. A method of producing the solid state electrolyte material of any one of claims 1-6 comprising:

   applying the coating layer onto the solid state electrolyte; and
   heating the coating layer to prepare the solid state electrolyte material.

10. The method of claim 9, wherein the applying in is using atomic layer deposition (ALD), plasma-enhanced ALD, chemical vapor deposition (CVD), low pressure CVD, plasma-enhanced CVD, physical vapor deposition (PVD), an epitaxy process, an electrochemical plating process, electroless deposition, a solution process, or combinations thereof.

11. The method of claim 9, wherein the applying is using atomic layer deposition or a solution process.

12. The method of any one of claims 9-11, further comprising annealing the coating layer after the heating step.

**Patentansprüche**

1. Festkörperelektrolytmaterial, umfassend:

    einen Festkörperelektrolyten (SSE); und
    eine Beschichtungsschicht aus ZnO,
    wobei der SSE eine Vielzahl von Poren in einer porösen 3D-Struktur umfasst, die konfiguriert ist, um ein aktives Anodenmaterial zu enthalten, wobei die Beschichtungsschicht eine Oberfläche der Poren beschichtet, wobei der SSE lithiumhaltiger SSE mit einer Granatstruktur ist und das aktive Anodenmaterial Lithiummetall ist und die Beschichtungsschicht Kontakt zwischen dem SSE-Material und dem Anodenmaterial erhöht.

2. Festkörperelektrolytmaterial nach Anspruch 1, wobei eine Oberflächenbedeckung des Festelektrolyten durch die Beschichtungsschicht zwischen 40 % und 100 % ist.

3. Festkörperelektrolytmaterial nach Anspruch 1 oder Anspruch 2, wobei der Festkörperelektrolyt die Formel I aufweist:

$$Li_A L_B G_C J_D Zr_E O_F \qquad (I)$$

wobei:

    A 4 bis 8 ist;
    B 1,5 bis 4 ist;
    C 0 bis 2 ist;
    D 0 bis 2 ist;
    E 0 bis 2 ist;
    F 10 bis 13 ist;
    L Y oder La ist;
    G Al, Mo, W, Nb, Sb, Ca, Ba, Sr, Ce, Hf, Rb oder Ta ist; und
    J Al, Mo, W, Nb, Sb, Ca, Ba, Sr, Ce, Hf, Rb oder Ta ist;

    wobei G und J verschieden sind.

4. Festkörperelektrolytmaterial nach Anspruch 1 oder Anspruch 2, wobei der SSE $Li_{6,75} La_{2,75} Ca_{0,25} ZF_{1,75} Nb_{0,25} O_{12}$ ist.

5. Festkörperelektrolytmaterial nach einem der Ansprüche 1-4, wobei die Dicke der Beschichtungsschicht zwischen 1 nm und 100 nm ist.

6. Festkörperelektrolytmaterial nach einem der Ansprüche 1-5, wobei die Oberflächenbedeckung des Festelektrolyten durch die Beschichtungsschicht zwischen 80 % und 100 % ist.

7. Festkörperbatterie, umfassend:

    eine aktive Kathodenmaterialschicht;
    eine aktive Anodenmaterialschicht; und
    das Festkörperelektrolytmaterial nach einem der Ansprüche 1-6.

8. Batterie nach Anspruch 7, wobei die Beschichtung dem Festkörperelektrolytmaterial einen Oberflächenschnittstellenwiderstand zwischen 10 $\Omega$-cm$^2$ und 1200 $\Omega$-cm$^2$ bereitstellt.

**9.** Verfahren zum Produzieren des Festkörperelektrolytmaterials nach einem der Ansprüche 1-6, umfassend:

Aufbringen der Beschichtungsschicht auf den Festkörperelektrolyten; und
Erwärmen der Beschichtungsschicht, um das Festkörperelektrolytmaterial herzustellen.

**10.** Verfahren nach Anspruch 9, wobei das Aufbringen unter Verwendung von Atomschichtabscheidung (ALD), plasmaunterstützter ALD, chemischer Dampfabscheidung (CVD), Niederdruck-CVD, plasmaunterstützter CVD, physikalischer Dampfabscheidung (PVD), eines Epitaxieprozesses, eines elektrochemischen Plattierungsprozesses, stromloser Abscheidung, eines Lösungsprozesses oder Kombinationen davon ist.

**11.** Verfahren nach Anspruch 9, wobei das Aufbringen unter Verwendung von Atomschichtabscheidung oder eines Lösungsprozesses ist.

**12.** Verfahren nach einem der Ansprüche 9-11, ferner umfassend das Glühen der Beschichtungsschicht nach dem Erwärmungsschritt.

**Revendications**

**1.** Matériau électrolyte solide comprenant :

un électrolyte solide (SSE) ; et
une couche d'enrobage de ZnO,
dans lequel le SSE comprend une pluralité de pores dans une structure poreuse 3D configurée pour contenir un matériau actif d'anode, la couche d'enrobage enrobe une surface des pores, dans lequel le SSE est un SSE contenant du lithium avec une structure de grenat et le matériau actif d'anode est du lithium-métal et la couche d'enrobage accroît le contact entre le matériau SSE et le matériau d'anode.

**2.** Le matériau électrolyte solide de la revendication 1, dans lequel une couverture de surface de l'électrolyte solide par la couche d'enrobage est comprise entre 40 % et 100 %.

**3.** Le matériau électrolyte solide de la revendication 1 ou 2, l'électrolyte solide ayant la formule I :

$$Li_AL_BG_CJ_DZr_EO_F \qquad (I)$$

où :

A est 4 à 8 ;
B est 1,5 à 4 ;
C est 0 à 2 ;
D est 0 à 2 ;
E est 0 à 2 ;
F est 10 à 13 ;
L est Y ou La ;
G est Al, Mo, W, Nb, Sb, Ca, Ba, Sr, Ce, Hf, Rb, ou Ta ; et
J est Al, Mo, W, Nb, Sb, Ca, Ba, Sr, Ce, Hf, Rb, ou Ta ;

où G et J sont différents.

**4.** Le matériau électrolyte solide de la revendication 1 ou 2, le SSE étant $Li_{6,75}La_{2,75}Ca_{0,25}Zr_{1,75}Nb_{0,25}O_2$.

**5.** Le matériau électrolyte solide de l'une quelconque des revendications 1 à 4, dans lequel l'épaisseur de la couche d'enrobage est comprise entre 1 nm et 100 nm.

**6.** Le matériau électrolyte solide de l'une quelconque des revendications 1 à 5, dans lequel la couverture de surface de l'électrolyte solide par la couche d'enrobage est comprise entre 80 % et 100 %.

**7.** Batterie solide comprenant :

une couche de matériau actif de cathode ;
une couche de matériau actif d'anode ; et
le matériau électrolyte solide de l'une quelconque des revendications 1 à 6.

8. La batterie de la revendication 7, dans laquelle l'enrobage fournit au matériau électrolyte solide une résistance d'interface de surface comprise entre 10 $\Omega$-cm$^2$ et 1200 $\Omega$-cm$^2$.

9. Procédé de production du matériau électrolyte solide de l'une quelconque des revendications 1 à 6 comprenant :

l'application de la couche d'enrobage sur l'électrolyte solide ; et
le chauffage de la couche d'enrobage pour préparer le matériau électrolyte solide.

10. Le procédé de la revendication 9, dans lequel l'application est réalisée en utilisant : dépôt de couche atomique (ALD), ALD assisté par plasma, dépôt chimique en phase vapeur (CVD), CVD basse pression, CVD assisté par plasma, dépôt physique en phase vapeur (PVD), processus d'épitaxie, processus de placage électrochimique, dépôt autocatalytique, processus en solution, ou des combinaisons de ceux-ci.

11. Le procédé de la revendication 9, dans lequel l'application est réalisée en utilisant un dépôt de couche atomique ou un processus en solution.

12. Le procédé de l'une quelconque des revendications 9 à 11, comprenant en outre le recuit de la couche d'enrobage après l'étape de chauffage.

FIG. 1A

FIG. 1B

FIG. 2A

FIG. 2B

FIG. 3

FIG. 4A    FIG. 4B    FIG. 4C

ZnO Pellet Reacting with Sufficient Molten Li

Molten Li

ZnO

Bright

0 min        3 min        6 min        10 min

FIG. 5A

ZnO Pellet Reacting with Limited Molten Li

Li
ZnO

Dark

0 s          20 s         40 s          60 s

FIG. 5B

EP 3 535 796 B1

FIG. 6B

FIG. 6A

FIG. 7A

FIG. 7B

**FIG. 8**

FIG. 9

FIG. 10B

FIG. 10A

FIG. 11A                                        FIG. 11B

**FIG. 12**

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHENG, G. et al.** *Nat. Nanotechnol.,* 2014, vol. 8, 618-623
- **S.S. ZHANG.** *J. Power Sources,* 2006, vol. 162, 1379-1394
- **LUO, W. et al.** *Nano Lett.,* 2015, vol. 15, 6149-6154
- **CHENG, L. et al.** *ACS Appl. Mater. Interfaces,* 2015, vol. 7, 2073-2081
- **ZHOU, W. et al.** *J. Am. Chem. Soc.,* 2016, vol. 138, 9385-9388
- **SHARAFI, A. et al.** *J. Power Sources,* 2016, vol. 302, 135-139
- **XIAO, P. et al.** *Acta Mater.,* 1996, vol. 44, 307
- **DREVET, B. et al.** *J. Mater. Sci.,* 2012, vol. 47, 8247
- **KLEIN, R. et al.** *J. Eur. Ceram. Soc.,* 2005, vol. 25, 1757
- **TAO, X. et al.** *Nano. Lett.,* 2017, vol. 17, 2967
- **MURUGAN, R. et al.** *Angew. Chem.,* 2007, vol. 119, 7925
- **AWAKA, J. et al.** *J. Solid State Chem.,* 2009, vol. 182, 2360
- **HAN, X. et al.** *Nature Materials,* 2017, vol. 16, 572-580